# EUROPEAN PATENT SPECIFICATION

(11) **EP 2 782 315 B1**
(45) Date of publication and mention of the grant of the patent: **19.07.2017**
(21) Application number: 14160208.6
(22) Date of filing: 17.03.2014
(51) Int. Cl.: H04L 29/06, H04W 12/02, H04M 3/42, H04W 84/08

(54) **MECHANISM TO OBTAIN AN MODIFIED ENCRYPTED SUBSCRIBER IDENTITY IN TETRA**
MECHANISMUS ZUM ERHALT EINER MODIFIZIERTEN VERSCHLÜSSELTEN TEILNEHMERIDENTITÄT IN TETRA
MÉCANISME POUR OBTENIR UNE IDENTITÉ D'ABONNÉ CHIFFRÉE MODIFIÉE DANS TETRA

(30) Priority: 18.03.2013 FI 20135258; 16.05.2013 FI 20135524
(43) Date of publication of application: 24.09.2014
(73) Proprietor: Airbus Defence and Space Oy, 00380 Helsinki (FI)
(72) Inventor: Tukia, Sami, 00380 Helsinki (FI); Rinne, Simo, 00380 Helsinki (FI)
(74) Representative: Kolster Oy Ab

(56) References cited:
- US-B1- 6 373 949
- MING HOUR YANG ET AL: "Protect mobile RFID location privacy using dynamic identity", COGNITIVE INFORMATICS, 2008. ICCI 2008. 7TH IEEE INTERNATIONAL CONFERENCE ON, IEEE, PISCATAWAY, NJ, USA, 14 August 2008 (2008-08-14), pages 366-374, XP031345085, DOI: 10.1109/COGINF.2008.4639190 ISBN: 978-1-4244-2538-9
- "Terrestrial Trunked Radio (TETRA); Voice plus Data (V+D); Part 7: Security", EUROPEAN STANDARD, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. TETRA 6, no. V3.3.1, 1 July 2012 (2012-07-01), XP014070176,

## Description

### FIELD

The present invention relates to a subscriber identity sent over air encrypted.

### BACKGROUND ART

A Professional Mobile Radio (PMR) network is a mobile communication network for a special group of users, for example, for one or more enterprises or institutions. Typical examples of PMR networks are public safety type PMR networks used by public officials such as police, fire brigade and medical personnel. One example technology that is used in PMR networks is Terrestrial Trunked Radio Access (TETRA).

One of many security aspects of TETRA is anonymity. The anonymity is achieved by using encrypted identities over the air interface. More precisely, the European Telecommunication Standard ETSI EN 300 392-7 V3.3.1 (2012-07) Terrestrial Trunked Radio (TETRA); Voice plus Data (V+D); Part 7: Security, specifies that whenever encrypted signalling is used, an encrypted short identity is sent instead of the true identity, the purpose being that active terminals cannot be identified. The encrypted short identity is calculated from the true identity with an algorithm that uses either a common cipher key or a static cipher key, depending on a security class used. The value of a common cipher key is the same at least within a location area but the whole network may use the same value. Typically the value of the static cipher key is the same within the whole network area. Hence, the encrypted short identity is a rather static identity and may remain the same within the area a terminal is moving. Therefore an observer may track the movement of the terminal, at least within a location area but possibly even within the whole network area.

Ming Hour Yang et al, "Protect mobile RFID location privacy using dynamic identity", 7th International Conference on Cognitive Informatics, IEEE 14 August 2008, pages 366-374 discloses an asynchronous dynamic identity scheme to protect data and location privacy of an RFID (radio frequency identification) user.

### SUMMARY

A general aspect of the invention provides a modified encrypted identity usable instead of an encrypted identity over the air interface of TETRA. The invention is defined in a method, and apparatus, a computer program product, and a system which are characterized by what is stated in the independent claims. The preferred embodiments of the invention are disclosed in the dependent claims.

### BRIEF DESCRIPTION OF THE DRAWINGS

In the following different embodiments will be described in greater detail with reference to the attached drawings, in which
Figure 1 is a simplified architecture of an exemplary system;
Figures 2 and 3 are schematic block diagrams of exemplary apparatuses;
Figures 4A to 4E illustrated exemplary calculation mechanisms;
Figures 5 to 10 are flow chart illustrating exemplary functionalities;
Figure 11 is an exemplary signaling chart; and
Figures 12 and 13 are block diagrams of exemplary apparatuses.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any wireless user apparatus, access point node, base station and/or corresponding component/network node that support use of encrypted subscriber identities/addresses in over the air transmissions in a communication system. The communication system may be a wireless communication system or a communication system utilizing both fixed networks and wireless networks. The protocols used, the specifications of communication systems, access point nodes, base stations and wireless user apparatuses develop rapidly. Such development may require extra changes to an embodiment. Therefore, all words and expressions should be interpreted broadly and they are intended to illustrate, not to restrict, the embodiment.

In the following, different embodiments will be described using, as an example of a system architecture whereto the embodiments may be applied, an architecture based on a Terrestrial Trunked Radio Access (TETRA) system and its security solution specified in the above identified European Telecommunication Standard, without restricting the embodiments to such a solution and wireless system. Another example is TETRAPOL.

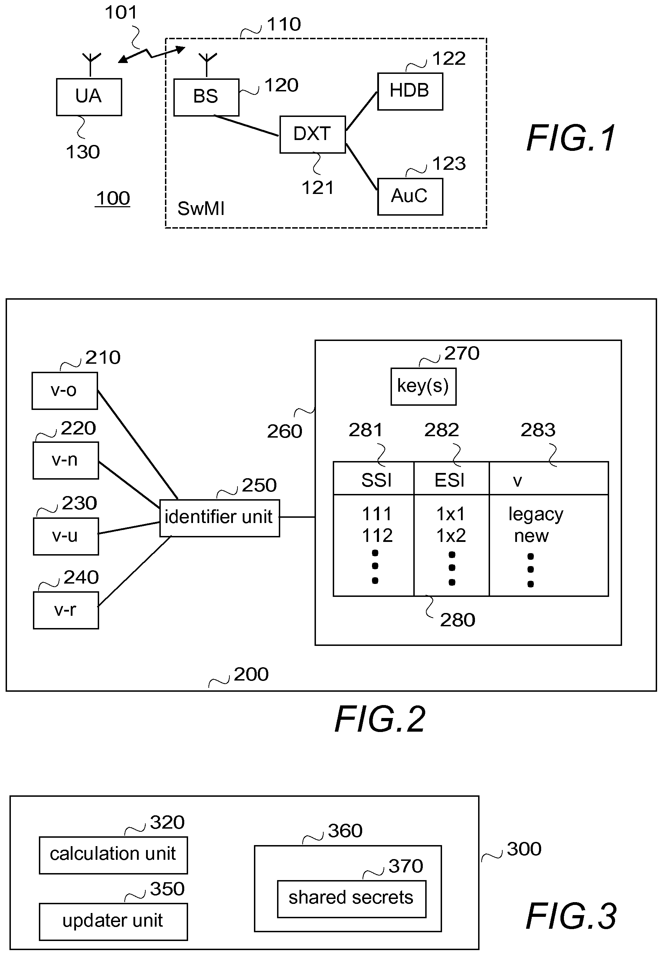

A general architecture of a communication system according to an embodiment based on TETRA is illustrated in Figure 1. Figure 1 is a simplified system architecture only showing some apparatuses and functional entities, all being logical units whose implementation may differ from what is shown. The connections shown in Figure 1 are logical connections; the actual physical connections may be different. It is apparent to a person skilled in the art that the systems also comprise other functions and structures used in or for communication in TETRA. They, as well as the protocols, key stream generations, re-keying methods for transferring secret keys securely to a user apparatus, and key management used, are well known by persons skilled in the art and are irrelevant to the actual invention. Therefore, they need not to be discussed in more detail here.

In the example illustrated in Figure 1, the TETRA radio system 100 comprises a user apparatus 130 connectable over an air link 101 to a switching and management infrastructure (SwMI) 110.

SwMI 110 is equipment for a voice plus data (V+D) network, which enables the TETRA user apparatuses to communicate with each other. In other words, SwMI includes all equipment and means, which enable users to communicate with each other via the TETRA network. The exact physical configuration of the SwMI is not, as such, relevant to the invention. Basically, the SwMI represents here any network infrastructure. In the example of Figure 1, SwMI 110 comprises a base station (BS) 120, a digital exchange (DXT) 121 for taking care of switching within a network and to/from other networks, a home database (HDB) 122 and an authentication centre (AuC) 123 for authentication and key management. TETRA utilizes a distributed subscriber database structure so that there is the home database 122 which comprises permanent information about the individual and/or group subscribers in the subscriber's home network, and a visitor database (not illustrated in Figure 1) which comprises temporary information about individual and/or group subscribers visiting in the network. Typically each digital exchange is provided with a visitor database.

The base station 120 is for uplink (from mobile user apparatuses to the base station) and downlink (from the base station to user apparatus(es)) over the air communication. The base station 120 may carry out the authentication protocol on behalf of the authentication centre, and in TETRA the base station is configured to calculate encrypted subscriber identities, as will be described in more detail below. In TETRA the encrypted subscriber identities sent over the air are short subscriber identities.

The user apparatus 130 may be a mobile user apparatus, like a handheld radio apparatus, or a so called fixed radio apparatus in a vehicle, for example. The user apparatus 130 is an apparatus providing secure voice and/or data communications for users over the air, either over the link 101 or in a direct mode communication in which TETRA radio user apparatuses communicate directly with each other without using SwMI. Here the user apparatus represents a combination of actual terminal equipment and a subscription/subscriber identification module that may be an integral part of the terminal equipment or detachable connected to the terminal equipment. The user apparatus comprises shared secrets, like the ciphering key, and is also configured to calculate an encrypted subscriber identity. Examples of user apparatuses and corresponding functionalities are described below.

Figure 2 is schematic block diagram of an exemplary base station 200 only showing some units and functional entities of the base station. The exemplary base station 200 is configured to use both encrypted short subscriber identities and temporary/modified encrypted short subscriber identities over the air, depending on user apparatus capabilities. Hence the base station provides backward compatibility to the user apparatuses that are already in operational use. For generating and/or using and/or updating and/or mapping different identities the base station 200 comprises in the example four different calculation units 210, 220, 230, 240, an identifier unit 250, and one or more memories 260 for storing shared secrets 270 and a look up table 280.

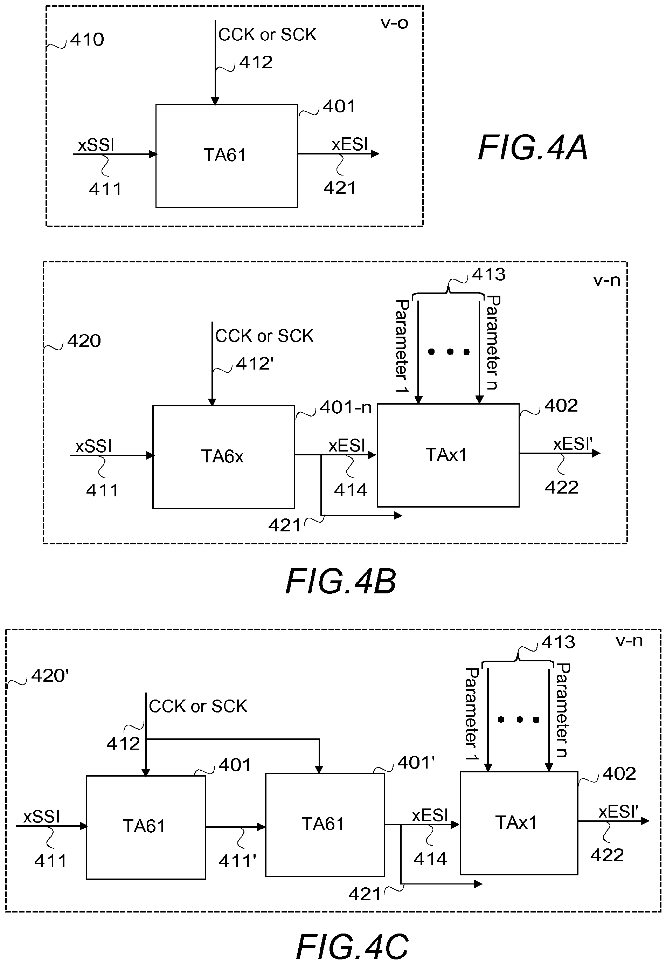

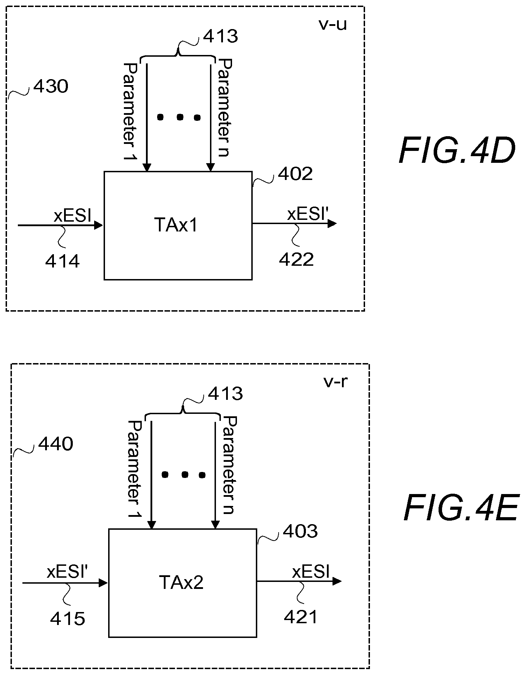

The calculation units in the illustrated example are a calculation unit v-o 210 described in more detail with Figure 4A, a calculation unit v-n 220 described in more detail either with Figure 4B or with Figure 4C, a calculation unit v-u 230 described in more detail with Figure 4D, and a calculation unit v-r 240 described in more detail with Figure 4E.

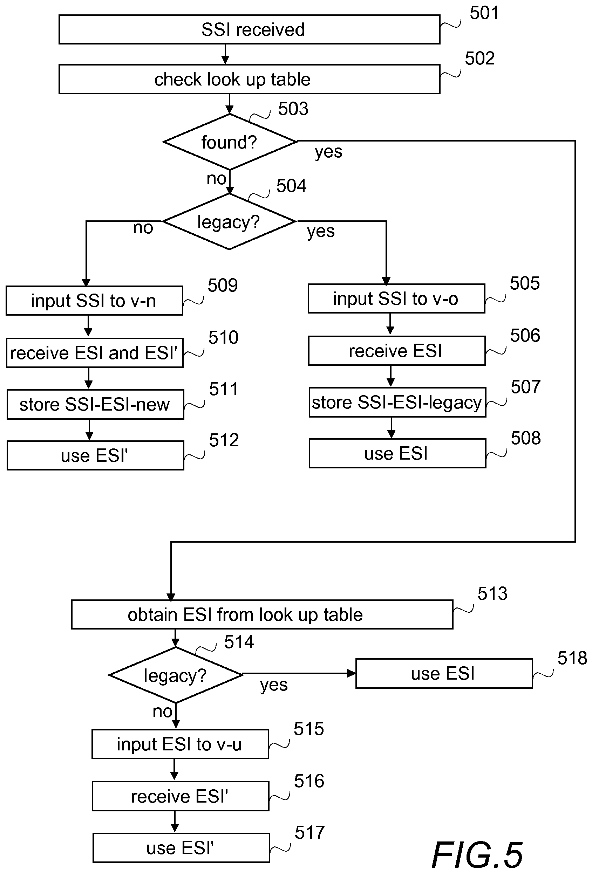

Different examples of the functionality of the identifier unit 250 are described in more detail below with Figures 5 to 8.

The shared secrets 270 include at least a ciphering key used, and it may include other shared secrets as well.

The look up table 280 associates a short subscriber identity 281 with an encrypted subscriber identity 282 and in the illustrated example also with information 283 whether or not a user apparatus having the short subscriber identity is a legacy user apparatus or a "non-legacy", new user apparatus for the purposes described below. A legacy user apparatus is configured to use the encrypted short identity (a conventional encrypted short identity), whereas a new user apparatus is configured to use instead of the (conventional) encrypted short identity a modified encrypted short identity (a temporary short identity). It should be appreciated that if corresponding information (legacy/new) is received via other means, the look up table may be implemented without the information 283. In another implementation, the information 283 may contain the modified encrypted subscriber identity. Further, it should be appreciated that the actual data format used for storing the information represented here by the look up table bears no significance, it suffices that a subscriber identity is associated with an encrypted identity.

Figure 3 is schematic block diagram of an exemplary user apparatus 300 only showing some units and functional entities of the user apparatus. The user apparatus is configured to use the temporary/modified encrypted short identity. For that purpose the exemplary user apparatus 300 comprises a calculation unit 320, an updater unit 350 and a memory 360 for storing shared secrets 370, like the keys and the temporary/modified encrypted subscriber identifier at least temporarily. Further, the user apparatus may be configured to maintain a look up table associating at least one or more short subscriber identities with corresponding encrypted subscriber identities and/or modified encrypted subscriber identities. The units and/or corresponding functionalities are described in more detail below. In a legacy apparatus the calculation unit corresponds to the one illustrated in Figure 4A. In a user apparatus supporting the modified encrypted subscriber identity the calculation unit may be based on the one illustrated either in Figure 4B or in Figure 4C. A user apparatus supporting the modified encrypted subscriber identity may be configured to store both the encrypted subscriber identity and the modified encrypted subscriber identity, in which case the calculation unit may comprise two units, for example one based on Figure 4B or Figure 4C and one based on Figure 4D.

It should be appreciated that herein, the terms "modified encrypted subscriber identity" and "temporary encrypted subscriber identity" are interchangeable, and the latter is used for the sake of clarity in the further examples.

Figures 4A to 4E illustrate exemplary calculation mechanisms implemented by the calculation units. Since the calculation mechanisms are used for all possible short identities/addresses a user apparatus may have, In Figures 4A to 4E x stands for the short address/identity type, or for a corresponding cryptographic address/identity. Different short address valid for a user apparatus are Individual Short Subscriber Identity (ISSI), Group Short Subscriber Identity (GSSI), Alias Short Subscriber Identity (ASSI), Visiting Short Subscriber Alias Identity (V-ASSI), and Visiting Group Short Subscriber Identity (V-GSSI), and the corresponding cryptographic addresses are Individual Encrypted Short Identity (IESI), Group Encrypted Short Identity (GESI), Alias Encrypted Short Identity (AESI), Visiting Alias Encrypted Short Identity (V-AESI), and Visiting Group Encrypted Short Identity (V-GESI). However, in the description term "short subscriber identity" and "encrypted subscriber identity", or corresponding abbreviations are used.

Only user apparatuses in a location area with the correct values of common cipher key (CCK) or static cipher key (SCK) shall be able to identify messages addressed for their attention.

Figure 4A illustrates the calculation unit v-o for calculating the encrypted subscriber identity for legacy user apparatuses, i.e. for user apparatuses that are not supporting the temporary encrypted subscriber identity. The calculation unit v-o, or more precisely the calculation mechanism version-old 410, comprises an algorithm 401 and uses two inputs: a short subscriber identity as input 411 and a legacy version of a common cipher key (CCK) or a static cipher key (SCK), the legacy version being an 80 bits long version of the key, as the other input 412. It depends on the security class of a location area whether CCK or SCK is used as an input: CCK is used within a location area in cells of security class 3 (authentication is mandatory), and SCK for cells of security class 2 (encryption used, authentication optional).

The both inputs 411, 412 are required by the TETRA algorithm TA61 401 that generates an output 421 which is an encrypted subscriber identity ESI. TA61 is an ETSI security algorithm which is only available on a restricted basis, and no inverse algorithm is defined. Therefore the above described look up table associating an encrypted subscriber identity (i.e. in the example the output of TA61) with the inputted subscriber identity is needed to solve the subscriber identity relating to an encrypted identity.

Figures 4B and 4C illustrate alternative examples of the calculation unit v-n 420 for calculating the encrypted subscriber identities for user apparatuses supporting temporary encrypted subscriber identities. In the examples it is further assumed that such apparatus also supports long versions of CCK and SCK which can be used to increase security. For example, a French patent application FR1254466 "Procédé de distribution d'une clef numérique de chiffrement vers des terminaux de telecommunication", having a common inventor with this application, discusses different key lengths and proposes a method how to use them in the identity encryption. However, the calculation unit version-new may be used also with short versions of CCK and SCK. For example, the short versions of CCK and SCK may be based on long versions and calculated as described in FR1254466, or the short versions of CCK and SCK may be the conventional ones, described in the ETSI standard identified above. In the illustrated examples, the calculation unit version-new, or more precisely the calculation mechanism version-new 420, 420' comprises an additional algorithm TAx1 402 and uses two plus n inputs: the short subscriber identity as input 411 and the common cipher key (CCK), or part of it, or the static cipher key (SCK) or part of it, as input 412, and one or more parameter inputs 413 to the additional algorithm TAx1, n being the number of the used parameter inputs, the number being one, two three, four, or more. The one or more parameters may be any shared knowledge between a user apparatus and a base station in the location area where the user apparatus is registered. Examples of such parameters include the ciphering keys CCK and SCK, a hyperframe number, a multiframe number, a TDMA (time division multiple access) frame number, a location area identity, a cell identifier, a carrier number, a color code, time related information, like date, a combination of a week number and/or month and/or a year, and a subscriber class, without restricting to the examples. Depending on a chosen parameter or parameter combination, value(s) may change from time-to-time and/or from cell-to-cell, from message-to-message, and/or based on some other criteria. For encrypting group short identities, the one or more parameters used may be different than those used with individual short identities. In addition to the inputs, other properties of the TAx1 algorithm are that it is a computationally light algorithm so that it can be run every time a temporary encrypted identity ESI' is used, and the output of the algorithm TAx1 should be such that if one ESI-ESI' pair is known, other ESI-ESI' pairs cannot be calculated based on that information. TAx1 algorithm can be a light algorithm since the identity first undergoes TA6x algorithm or at least once TA61 algorithm, TA6x and TA61 providing the secured identity encryption.

In the example illustrated in Figure 4B, the calculation mechanism version-new 420 comprises a new TETRA algorithm TA6x 401-n and one modifier TETRA algorithm TAx1 402. At the simplest, the new algorithm TA6x may be the existing algorithm TA61 updated to process the long version (128 bits) of the cipher keys. However, any other algorithm providing at least the same security as TA61 may be used. Preferably, but not necessarily, the new algorithm TA6x will be an ETSI security algorithm which is only available on a restricted basis.

In the illustrated calculation mechanism version-new in Figure 4B, TA6x algorithm 401-n uses two inputs: a short subscriber identity as input 411 and a long version of a common cipher key (CCK) or a static cipher key (SCK), depending on the security class of a location area, the long version being an 128 bits long version of the key, as the other input 412'. The generated output from the TA6x algorithm is inputted as a first output 421 from the calculation mechanism version-new 420. The first output corresponds to the encrypted subscriber identity, and therefore the same name and reference is used below for the first output and the output of the calculation mechanism 410 of Figure 4A. Further, the output 421 from the TA6x algorithm is inputted as input 414 to the modifier TETRA algorithm TAx1 402, the other inputs 413 being the n parameter values. For example, the other inputs may comprise the cipher key inputted also to the TA6x algorithm, a frame number, and one or more cell specific parameters. The algorithm TAx1 402 then outputs, as a second output 422 from the calculation mechanism version-new 420 the temporary encrypted subscriber identity ESI'. Since the modifier TETRA algorithm TAx1 is a light algorithm, the temporary subscriber identity ESI' may be calculated each time it is needed without causing peak loads, and hence the frame number used as an input may be a hyperframe number, a multiframe number or even a TDMA frame number. When the TDMA frame number is used, the temporary subscriber identity will change each time something is sent over the air.

In another embodiment, an updated TA6x algorithm is updated also to comprise the modifier algorithm. In the embodiment, in addition to the above mentioned two inputs, one or more further parameter inputs are used as inputs to the algorithm. For example, the inputs may comprise a short subscriber identity, a long version of a common cipher key (CCK) or a static cipher key (SCK), a frame number and one or more cell specific parameters. In the embodiment, the algorithm output corresponds to the encrypted subscriber identity, and it is stored to the look up table, and used over the air. It should be appreciated that the look up table has to be updated each time when the key or any of the cell specific parameters change, whereas in the example of Figure 4B, the look up table is updated only when the key changes. When the updated TA6x algorithm comprising the modifier algorithm is used and a frame number is used as an input parameter, the look up table will be recalculated periodically causing peak load to the processors, the period depending on the frame number type selected.

In the illustrated example of Figure 4C, the calculation mechanism version-new 420' comprises three algorithms, two TETRA algorithms TA61 401, 401' and one modifier TETRA algorithm TAx1 402. It should be appreciated that other implementations of the calculation mechanism version-new 420' may comprise one, three, four, five or more TA61 algorithms. In other words, the TA61 algorithm may be performed m times, the value of the m being a system wide parameter, m being one or more. In the illustrated calculation mechanism version-new in Figure 4C, the CCK or SCK, i.e. input 412 is inputted to each TA61 algorithms, whereas the other input varies: the short subscriber identity SSI, i.e. input 411 is inputted to the first TA61 algorithm 401, the generated output 411' from the first TA61 algorithm is inputted to the second TA61 algorithm 401', and the generated output 421 from the second TA61 algorithm is inputted as a first output 421 from the calculation mechanism version-new 420'. The first output corresponds to the encrypted subscriber identity, and therefore the same name and reference is used below for the first output and the output of the calculation mechanism 410 of Figure 4A. Further, the output 421 from the second TA61 algorithm is inputted as input 414 to the modifier TETRA algorithm TAx1 402, the other inputs 413 being the n parameter values. The algorithm TAx1 402 then outputs, as a second output 422 from the calculation mechanism version-new 420' the temporary encrypted subscriber identity ESI'.

In another implementation based on Figure 4C, when long versions of keys are used, the long key may be divided so that a first part of CCK/SCK is inputted to the first TA61, and a second part is inputted to the second TA61.

A calculation unit in a user apparatus that is based on one of those described above with Figure 4B or with Figure 4C may differ from the described one in such a way that it only has one output, the second output.

Figure 4D illustrates the calculation unit v-u 430 for calculating a temporary encrypted short identity when a corresponding encrypted short identity has been calculated earlier and/or for updating the temporary encrypted subscriber identities in response to at least one of the parameter values used as input. The calculation unit v-u, or more precisely the calculation mechanism version-updated 430 comprises the modifier TETRA algorithm TAx1 402, having as input 414 i.e. the first output 421 of the calculation mechanism version-new, obtainable from a look up table, and the n parameter values as inputs 413. The algorithm TAx1 402 then outputs (output 422) an updated temporary encrypted subscriber identity ESI'.

It should be appreciated that in another implementation, the calculation mechanism version-new 420, 420' does not comprise the algorithm TAx1, and in the implementation a combination of the calculation mechanism version-new 420, 420' and the calculation mechanism version-updated 430 is used when the temporary subscriber identity ESI' is calculated for the first time.

Further, if the value of m is one, the temporary subscriber identity ESI' may be calculated, for the first time in the base station and each time in the user apparatus, by using the calculation mechanism version-old and the calculation mechanism version-update. In such an implementation the base station does not necessarily comprise the calculation mechanism version new described with Figure 4C but a combination of the mechanisms in Figures 4A and 4D are used to obtain the outputs. The same applies to the user apparatus.

Figure 4E illustrates the calculation unit v-r 440 for calculating from the temporary encrypted subscriber identity the corresponding encrypted identity. The calculation unit v-r, or more precisely a calculation mechanism version-reversed 440 comprises a reverse modifier TETRA algorithm TAx2 403, having as input 415 the temporary subscriber identity ESI' and the n parameter values as other inputs 413. The algorithm TAx2 403 outputs the corresponding encrypted subscriber identity ESI (output 421).

Figure 5 illustrates an exemplary functionality of a base station when encrypted subscriber identities are used in the air interface. More precisely, Figure 5 illustrates an exemplary functionality of the identifier unit.

When a short subscriber identity is received in step 501, it is checked in step 502, whether or not the short subscriber identity can be found from the look up table.

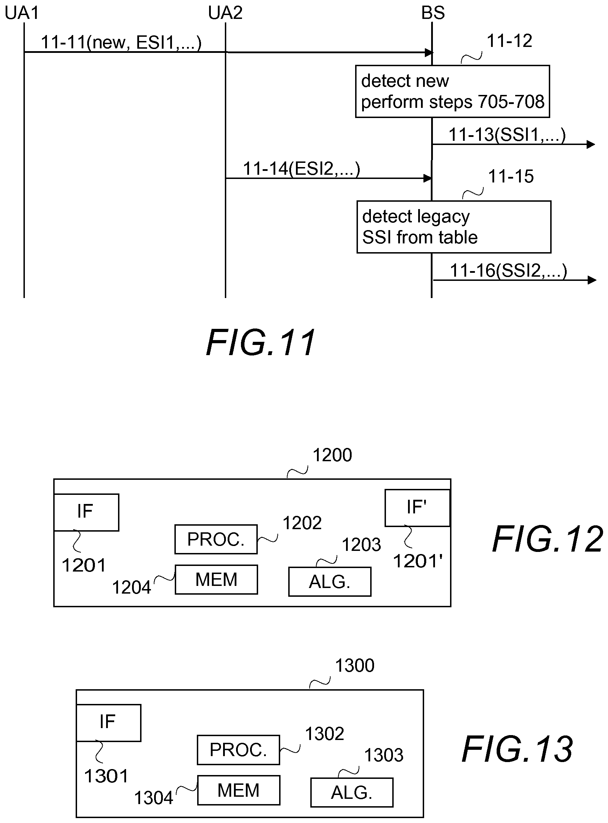

If the short subscriber identity is not found from the look up table (step 503), it is determined in step 504 whether the user apparatus supports temporary encrypted subscriber identities or whether it is a legacy user apparatus. There are several ways to perform the determination. For example, SwMI has knowledge about user apparatuses that support the new mechanism and the knowledge is distributed to each base station for all user apparatuses that are registered in that cell. The knowledge may be in the home database, for example. The data can be given to the SwMI as a subscriber specific parameter, for example during subscription provisioning. The SwMI may be configured to add to downlink messages targeted to apparatuses supporting the new functionality, that is the use of the long version of a key, information indicating the support, and correspondingly the user apparatuses supporting the long version of keys may be configured to add the information in uplink messages. The information may be given as an address type in a MAC PDU, as will be described in more detail with Figure 11. Another example is to deduce the support or non-support of temporary encrypted subscriber identities from the user apparatuses capability to support TEA (TETRA Encryption Algorithm) algorithms using long ciphering keys, if it is assumed that such user apparatuses also support the new mechanisms described herein. The support of the TEA algorithms using the long ciphering keys is revealed during registration phase when a key stream generator to be used is negotiated. Similarly group specific parameters may be used to define the groups that support the new functionality. Yet another example is that the user apparatus informs its capability, for example during first registration in "class of MS information".

If the user apparatus is a legacy apparatus (step 504), the received subscriber identity is inputted in step 505 to the calculation mechanism version-old (v-o), and when the output, i.e. the encrypted subscriber identity, is received in step 506, the short subscriber identity, the encrypted subscriber identity and information on the fact that the user apparatus is a legacy user apparatus, are stored in step 507 in the look up table. Then the encrypted subscriber identity is used (step 508) over the air interface.

If the user apparatus is not a legacy user apparatus (step 504), it supports the new functionality, and the received subscriber identity is inputted in step 509 to the calculation mechanism version-new (v-n), and when the two outputs, i.e. the encrypted subscriber identity and the temporary encrypted subscriber identity, are received in step 510, the short subscriber identity, the encrypted subscriber identity and information on the fact that the user apparatus supports the new functionality, are stored in step 511 in the look up table, and the temporary encrypted subscriber identity is used (step 512) over the air interface.

If the subscriber short identity is found from the look up table (step 503), the encrypted subscriber identity is obtained in step 513 from the look up table. Then it is determined in step 514 whether the user apparatus supports temporary encrypted subscriber identities or if it is a legacy user apparatus, step 514 being similar to step 504.

If the user apparatus is not a legacy user apparatus (step 514), it supports the new functionality, and the obtained encrypted subscriber identity is inputted in step 515 to the calculation mechanism version-update (v-u). When the temporary encrypted subscriber identity is received in step 516, it will be used (step 517) over the air interface. Since the calculation mechanism version-update (v-u) is a light algorithm, calculating each time, when an encrypted identifier is needed, the temporary encrypted identifier is possible without overloading processing resources in the base station, or without updating/retrofitting the hardware in the base station.

If the user apparatus is a legacy apparatus (step 513), the encrypted subscriber identity is used (step 518) over the air interface.

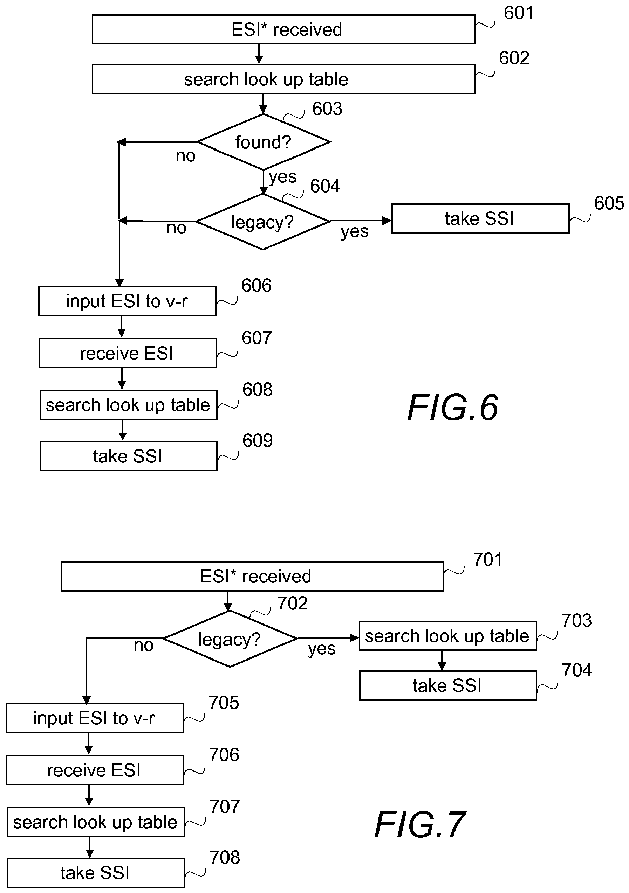

Figures 6 and 7 illustrate exemplary functionalities of the base station, or more precisely an exemplary functionality of the identifier unit, when an encrypted short identity is received over the air. The received encrypted short identity may or may not be a temporary one. The difference between the examples is that in Figure 7 non-legacy user apparatuses are configured to add information indicating "non-legacy" to uplink messages, and hence the information may not be stored to the look up table, whereas in the example of Figure 6 the look up table is used for receiving the information.

Referring to Figure 6, an encrypted short identity is received over the air in step 601. Therefore the received encrypted short identity is searched for in step 602 from the look up table. If it is found (step 603), it is checked in step 604 from the look up table, whether or not the encrypted short identity is for a legacy user apparatus. If it is, the short subscriber identity from the look up table is taken into use in step 605.

If the encrypted short identity is not found from the look up table (step 603), or it is not a legacy user apparatus (step 604), i.e. it supports the new functionality, the received encrypted short identity is a temporary encrypted short identity that is inputted in step 606 to the mechanism version-reversed, and when the output from the calculation mechanism version-reversed, i.e. the corresponding encrypted short identity, is received in step 607, the look up table is searched for in step 608 using this output received from the calculation mechanism version-reversed. Then a corresponding subscriber identity from the look up table is taken into use in step 609.

Referring to Figure 7, an encrypted short identity is received over the air in step 701. It is checked in step 702 from the look up table, whether or not the message indicates a legacy user apparatus. If it indicates, the received encrypted short identity is searched for in step 703 from the look up table, and the short subscriber identity from the look up table is taken into use in step 704.

If the message does not indicate a legacy user apparatus (step 702), i.e. the message indicates that the user apparatus supports the new functionality, the received encrypted short identity is a temporary encrypted short identity that is inputted in step 705 to the mechanism version-reversed, and when the output from the calculation mechanism version-reversed, i.e. the corresponding encrypted short identity, is received in step 706, the look up table is searched for in step 707 using this output received from the calculation mechanism version-reversed. Then a corresponding subscriber identity from the look up table is taken into use in step 708.

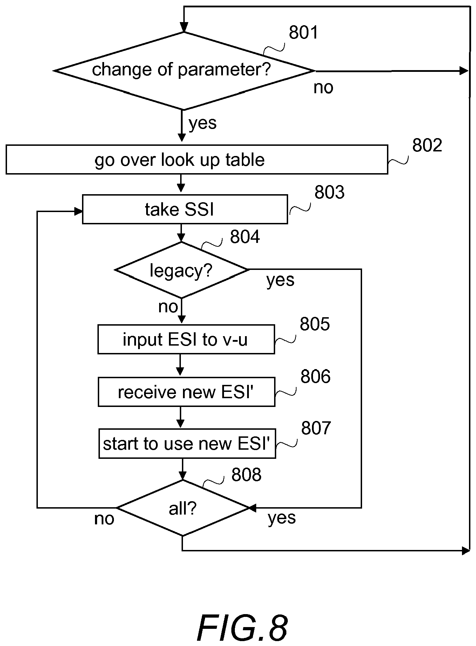

Figure 8 illustrates how the temporary encrypted subscriber identities are updated in the base station. In the example of Figure 8 it is assumed that the value of the cipher key (CCK or SCK) remains the same, that the base station stores at least temporarily the temporary encrypted subscriber identities, that the one or more parameters are cell specific parameters whose value changes. This may be the case with an implementation in which the calculation mechanism version-new comprises the modifier algorithm as an integrated algorithm and only the encrypted subscriber identity that is used over the air, is received as output. Another example is, when the modifier algorithm is a separate algorithm, that the temporary encrypted subscriber identities are temporarily maintained in a random access memory type of a memory in the base station so that they are not recalculated each time although they are not stored.

When a change in a value of the at least one of one or more parameters used as input to the TAx1 and TAx2 algorithms is detected in step 801, the look up table is gone over (step 802) for each short subscriber identity found in the look up table. In other words, a short subscriber identity is taken in step 803, and from the information in the look up table it is checked, whether or not the short subscriber identity relates to a legacy user apparatus. If not, the encrypted subscriber identity that is associated with the short subscriber identity in the look up table is inputted in step 805 to the calculation mechanism version-update (v-u). When a new value for the temporary encrypted subscriber identity is received in step 806, it will be used (step 807) over the air interface.

Then it is checked in step 808, whether or not all short subscriber identities in the look up table are gone over. If not, the process proceeds to step 803 to take the next short subscriber identity to be processed. If all are gone over (step 808), the process proceeds to step 801 to monitor a change of a parameter.

If in step 804 it is detected that the short subscriber identity relates to a legacy user apparatus, the process proceeds to step 808 to check whether or not all short subscriber identities in the look up table are gone over.

As is obvious from the above, the updating procedure is a light and fast one.

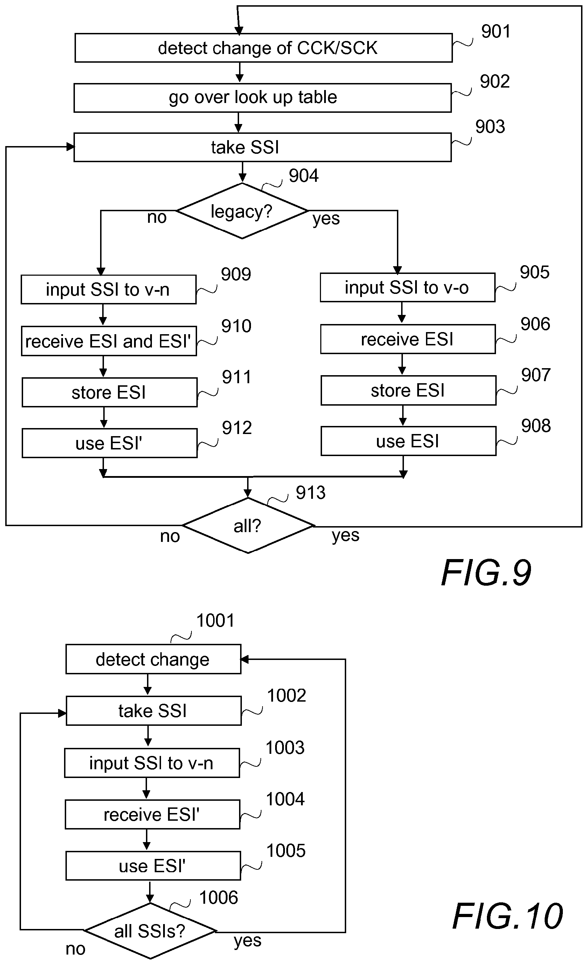

Figure 9 illustrates how the encrypted subscriber identities, including the temporary ones, are updated in the base station when the value of the cipher key (CCK or SCK) changes.

When a change in a value of the cipher key (CCK or SCK) is detected in step 901, the look up table is gone over (step 902) for each short subscriber identity found in the look up table. In other words, a short subscriber identity is taken in step 903 to be under process, and from the information in the look up table it is checked, whether or not the short subscriber identity relates to a legacy user apparatus.

If the user apparatus is a legacy apparatus (step 904), the subscriber identity under process is inputted in step 905 to the calculation mechanism version-old (v-o), the calculation mechanism using the changed value of the cipher key as the other input. When the output, i.e. the encrypted subscriber identity, is received in step 906, the new value of the encrypted subscriber identity is stored in step 907 in the look up table, the new value replacing the old one. Then the new encrypted subscriber identity will be used (step 908) over the air interface, and the process proceeds to step 913 to check, whether or not all short subscriber identities have updated values. If not, the process proceeds to step 903 to take a short subscriber identity to be under process. If all are processed (step 913), i.e. have updated values, the process proceeds to step 901 to wait for detecting the next time a value of the ciphering key changes.

If the user apparatus is not a legacy user apparatus (step 904), it supports the new functionality, and the subscriber identity under process is inputted in step 909 to the calculation mechanism version-new (v-n), the calculation mechanism using the changed value of the cipher key as the other input(s). When the two outputs, i.e. the encrypted subscriber identity and the temporary encrypted subscriber identity, are received in step 910, the new value for the encrypted subscriber identity is stored in step 911 in the look up table, the new value replacing the old one, and the new temporary encrypted subscriber identity will be used (step 912) over the air interface. Then the process proceeds to step 913 to check, whether or not all short subscriber identities have updated values.

Figure 10 illustrates an exemplary functionality of the user apparatus, or more precisely, an exemplary functionality of the updater unit. In the example it is assumed that the calculation unit is based on the mechanism illustrated in Figure 4B. Further, it is assumed that the temporary encrypted subscriber identity is maintained temporarily in the memory at least until the user apparatus is switched off. Further, it is assumed that the user apparatus may have more than one short subscriber identity, for example group identities.

When the updater unit detects (step 1001) a change, like switching on the user apparatus in a cell using encrypted information exchange, and/or the user apparatus moving from a cell having a security class 2 to a cell having a security class 3 or vice versa, or the user apparatus moving from a cell in which no encryption is used to either a cell having security class 2 or to a cell having security class 3, and/or a value of the ciphering key CCK or SCK has changed, and/or at least one of the one or more parameter values used for the temporary encrypted subscriber identity has changed, the user apparatus takes in step 1002 a short subscriber identity, and inputs in step 1003 it to the calculation unit, i.e. to the modified calculation unit v-n. When the output, i.e. the temporary encrypted subscriber identity, is received in step 1004, the received temporary encrypted subscriber identity will be used (step 1005) over the air interface, and the process proceeds to step 1006 to check, whether or not all short subscriber identities have been processed. If not, the process proceeds to step 1002 to take a next short subscriber identity to be under process. If all are processed (step 1006), i.e. have updated values, the process proceeds to step 1001 to wait for detecting the next change.

As is evident from the above, the recalculations of the look up table is needed only in response to a corresponding ciphering key exchanging, and a change in a parameter value triggers only the light algorithm to obtain a temporary encrypted subscriber identity (or identities), thereby making it easy to change the value of the temporary encrypted subscriber identity rather frequently by means of changing a parameter value. In other words, introducing the modifier algorithm and the one or more parameters modifies the encrypted subscriber identity to a more dynamic identity.

Figure 11 is a signaling chart illustrating signaling in an exemplary implementation in which the user apparatuses supporting the new functionality are configured to add to a header part of an uplink message information that they support the new functionality, or long keys, or any corresponding information wherefrom the network side can deduce whether or not the user apparatus is a legacy apparatus.

In the illustrated example, a user apparatus UA1 is supporting the new functionality, and therefore has added to a header part of message 11-11 carrying the encrypted short information (ESI1), information (new) indicating support for the new functionality. For example, the information (new) may be MAC PDU address type value "11" indicating that the encrypted short identity is obtained by using the long version of a corresponding ciphering key. In other words, following definition may be used: MAC PDU address type 11 = SSI, AIE with 128 bits. A legacy apparatus uses the currently used address type, i.e. MAC PDU address type 00 = SSI. It should be appreciated that the network side is preferably configured to use the similar addressing method, although this is not illustrated in the example of Figure 11. An advantage of the use of MAC PDU address type value is that existing packet data units (PDUs) can be used as such, there is no need to add any bits to the header thus facilitating the adaption (commissioning) the new functionality. Other advantages include that it is fully compatible with legacy terminals, same control and traffic channels may be used for legacy and non-legacy terminals, and no additional channel resources are needed for conveying the information.

Referring to the example of Figure 11, when a base station BS serving the user apparatus UA1 receives message 11-11, it detects, in point 11-12, from the header part that the user apparatus supports the new functionality, and therefore performs functionality corresponding to steps 705 to 707 described above with Figure 7 to solve the short subscriber identity. When the short subscriber identity is solved, the base station forwards message 11-13 towards the recipient, the message 11-13 having as a sender information the short subscriber identity (SSI1).

In the illustrated example, a user apparatus UA2 is a legacy user apparatus, and a header part of message 11-14 carries the encrypted short information (ESI2), but has no information on support for the new functionality.

When a base station BS serving the user apparatus UA2 receives message 11-14, it detects, in point 11-15, from the header part that the user apparatus is a legacy apparatus, and therefore uses the look up table to obtain the short subscriber identity and therefore performs functionality corresponding to steps 703 and 704 described above with Figure 7. When the short subscriber identity is obtained/retrieved, the base station forwards message 11-16 towards the recipient, the message 11-16 having as a sender information the short subscriber identity (SSI2).

It may happen that there are two subscriber identities having the same encrypted subscriber identity value used over the air, the other value being the temporary encrypted subscriber identity and the other one the conventional one. By means of the legacy/"non-legacy" information, either in the look up table or in the header part, the base station, for example, can deduce whether or not the received encrypted subscriber identity is a temporary one, and thereby find the proper subscriber identity. A user apparatus receiving, because of the value of the encrypted subscriber identity, a message targeted to another user apparatus, cannot decrypt the rest of the message because it does not have a proper key, will at the end ignore the message.

Figure 12 is a simplified block diagram illustrating some units for an apparatus 1200 configured to be a base station. In the illustrated example, the apparatus comprises two or more interfaces (IF) 1201, 1201' for receiving and transmitting information, at least one for over the air information exchange with user apparatuses and at least one for information exchange within the network, a processor 1202 configured to implement at least the identifier unit functionality/functionalities described herein with corresponding algorithms 1203, and memory 1204 usable for storing a program code required for the identifier unit and the algorithms and other information, like the look up table, described above.

Figure 13 is a simplified block diagram illustrating some units for an apparatus 1300 configured to be a user apparatus of a new type, i.e. an apparatus providing at least the updater unit. In the illustrated example the apparatus comprises one or more interfaces (IF) 1301 for receiving and transmitting information over the air, a processor 1302 configured to implement at least the updater unit functionality described herein with a corresponding algorithm/algorithms 1303 and a memory 1304 usable for storing a program code required at least for the updater unit.

In other words, an apparatus configured to provide the base station, and/or an apparatus configured to provide the user apparatus, or an apparatus configured to provide one or more corresponding functionalities, is a computing device that may be any apparatus or device or equipment configured to perform one or more of corresponding apparatus functionalities described with an embodiment/example/implementation, and it may be configured to perform functionalities from different embodiments/examples/implementations. The unit(s) described with an apparatus may be separate units, even located in another physical apparatus, the distributed physical apparatuses forming one logical apparatus providing the functionality, or integrated to another unit in the same apparatus.

The techniques described herein may be implemented by various means so that an apparatus implementing one or more functions of a corresponding apparatus described with an embodiment/example/implementation comprises not only prior art means, but also means for implementing the one or more functions of a corresponding apparatus described with an embodiment and it may comprise separate means for each separate function, or means may be configured to perform two or more functions. For example, the units, and/or algorithms, and/or calculation mechanisms may be software and/or software-hardware and/or hardware and/or firmware components/modules (recorded indelibly on a medium such as read-only-memory or embodied in hard-wired computer circuitry) or combinations thereof. Software codes may be stored in any suitable, processor/computer-readable data storage medium(s) or memory unit(s) or article(s) of manufacture and executed by one or more processors/computers.

An apparatus configured to provide the base station, and/or an apparatus configured to provide the user apparatus, and/or an apparatus configured to provide one or more corresponding functionalities, may generally include a processor, controller, control unit, micro-controller, or the like connected to a memory and to various interfaces of the apparatus. Generally the processor is a central processing unit, but the processor may be an additional operation processor. Each or some or one of the units and/or algorithms and/or calculation mechanisms described herein may be configured as a computer or a processor, or a microprocessor, such as a single-chip computer element, or as a chipset, including at least a memory for providing storage area used for arithmetic operation and an operation processor for executing the arithmetic operation. Each or some or one of the units and/or algorithms and/or calculation mechanisms described above may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions or calculations of one or more embodiments. In other words, each or some or one of the units and/or the algorithms and/or the calculation mechanisms described above may be an element that comprises one or more arithmetic logic units, a number of special registers and control circuits.

Further, an apparatus implementing functionality or some functionality according to an embodiment/example/implementation of an apparatus configured to provide the base station, and/or an apparatus configured to provide the user apparatus, or an apparatus configured to provide one or more corresponding functionalities, may generally include volatile and/or non-volatile memory, for example EEPROM, ROM, PROM, RAM, DRAM, SRAM, double floating-gate field effect transistor, firmware, programmable logic, etc. and typically store content, data, or the like. The memory or memories may be of any type (different from each other), have any possible storage structure and, if required, being managed by any database management system. The memory may also store computer program code such as software applications (for example, for one or more of the units/algorithms/calculation mechanisms) or operating systems, information, data, content, or the like for the processor to perform steps associated with operation of the apparatus in accordance with examples/embodiments. The memory, or part of it, may be, for example, random access memory, a hard drive, or other fixed data memory or storage device implemented within the processor/apparatus or external to the processor/apparatus in which case it can be communicatively coupled to the processor/network node via various means as is known in the art. An example of an external memory includes a removable memory detachably connected to the apparatus.

An apparatus implementing functionality or some functionality according to an embodiment/example/implementation of an apparatus configured to provide the base station, and/or an apparatus configured to provide the user apparatus, or an apparatus configured to provide one or more corresponding functionalities, may generally comprise different interface units, such as one or more receiving units for receiving user data, control information, requests and responses, for example, and one or more sending units for sending user data, control information, responses and requests, for example. The receiving unit and the transmitting unit each provides an interface in an apparatus, the interface including a transmitter and/or a receiver or any other means for receiving and/or transmitting information, and performing necessary functions so that content and other user data, control information, etc. can be received and/or transmitted. The receiving and sending units may comprise a set of antennas, the number of which is not limited to any particular number.

Further, an apparatus implementing functionality or some functionality according to an embodiment/example/implementation of an apparatus configured to provide the base station, and/or an apparatus configured to provide the user apparatus, or an apparatus configured to provide one or more corresponding functionalities, may comprise other units, like a user interface unit.

Although in the above the short subscriber identities and corresponding encrypted subscriber identities are used in the examples, it should be appreciated that the examples are implementable with original subscriber identities and corresponding encrypted identities as well.

As is evident from the above, the examples are backward compatible thereby allowing use of legacy user apparatuses (and groups) and user apparatuses (and groups) supporting the new functionality. It should be appreciated that in future, when legacy apparatuses are not any more in use, the functionalities providing the backward compatibility may be omitted.

The steps and related functions described above in Figures 5 to 10 are in no absolute chronological order, and some of the steps may be performed simultaneously or in an order differing from the given one. For example, when the value of m is one, i.e. TA61 algorithm is performed only once, in the example of Figure 5, steps may be performed in the order: 501, 502, 503, not found, then 505, 506, 504 and if legacy steps 507, 508, if not legacy steps corresponding to 515 and 516, then 511 and 512. Other functions can also be executed between the steps or within the steps. For example, when the value of m is one and instead of one algorithm the user apparatus comprises algorithms of Figures 4A and 4D, in step 1003 the short subscriber identity is inputted to the algorithm of Figure 4A, and the received output (encrypted subscriber identity) is inputted to the algorithm of Figure 4D. Some of the steps or part of the steps can also be left out or replaced by a corresponding step or part of the step. For example, the steps 602 to 604 may be omitted if the header part comprises information indicating support or not support for the new functionality.

It will be obvious to a person skilled in the art that, as the technology advances, the inventive concept can be implemented in various ways. The invention and its embodiments are not limited to the examples described above but may vary within the scope of the claims.

## Claims

1. A method **characterized by** comprising:
modifying (402) an encrypted short identity of TETRA, obtained as an output from an algorithm TA61 or an algorithm TA6x using a short subscriber identity or a short group identity and a common ciphering key or a shared ciphering key as inputs, by an algorithm using the encrypted identity (414) and one or more parameter values (413) as inputs of the algorithm, the algorithm outputting a modified encrypted identity (422); and
using (512, 517, 807, 912, 1005) the modified encrypted identity as identity information in information transmitted over an air interface.

2. A method as claimed in claim 1, further comprising:
checking (504, 514, 804, 904) whether or not a user apparatus or a group whose identity is encrypted supports the modified encrypted identity; and
performing the modifying only in response to the user apparatus or the group supporting the modified encrypted identity.

3. A method as claimed in claim 1 or 2, further comprising:
obtaining the encrypted identity as an output of a further algorithm (401') using a subscriber identity or a group identity as an input and a ciphering key as another input.

4. A method as claimed in claim 3, further comprising:
repeating the further algorithm two or more times, each repetition using a previous output of the further algorithm instead of the subscriber identity or the group identity as the input and the ciphering key as the other input; and
receiving the encrypted identity to be modified as an output after the repetitions.

5. A method as claimed in any of the preceding claims, further comprising associating (511) the encrypted identity with a corresponding a subscriber identity or a group identity and storing the association.

6. A method as claimed in claim 5, further comprising associating the encrypted identity and the subscriber identity or the group identity with information whether or not the modified encrypted identity is supported.

7. A method as claimed in any of the previous claims, further comprising updating (805, 1003) the modified encrypted identity in response to detecting (801, 1001) a change in the one or more parameter values.

8. A method as claimed in any of the previous claims, further comprising
receiving (601) in the network side a message with the modified encrypted identity; and
resolving the encrypted identity by inputting (606) the received modified encrypted identity as an input to a reverse algorithm that uses the one or more parameter values as other inputs.

9. A method as claimed in claim 8, further comprising deducing whether or not the received encrypted identity is a temporary identity on the basis of information in a header part of a message or on the basis of information maintained in the network side.

10. A method as claimed in claim 9, wherein the information is provided by setting MAC PDU address type of the message to value 11.

11. A method as claimed in any of the previous claims, wherein the one or more parameters include at least one of the following group comprising: a hyperframe number, a multiframe number, a TDMA frame number, a location area identity, a cell identifier, a carrier number, a color code, time related information, and a subscriber class.

12. A computer program product, when executed on a computer, **characterized by** comprising program instructions configured to perform any of the steps of a method according to any of claims 1 to 11.

13. An apparatus (1200, 1300) **characterized by** comprising means for implementing a method according to any of the preceding claims 1 to 11.

14. A system (100) providing over an air communications (101) between a TETRA network (110) and a TETRA user apparatus (130), the system comprising a TETRA base station (120) configured to provide encrypted services over the air and comprising means for implementing a method according to any of claims 1 to 11; and a TETRA user apparatus (130) configured to use an encrypted communication over the air to the base station, the TETRA user apparatus (130) comprising means for modifying an encrypted short identity of TETRA by an algorithm using the encrypted identity and one or more parameter values as inputs of the algorithm, the algorithm outputting a modified encrypted identity, and means for using the modified encrypted identity as identity information in information transmitted over an air interface..

15. A system (100) as claimed in claim 14, wherein the TETRA user apparatus (130) further comprises means for obtaining the encrypted identity as an output of a further algorithm using a subscriber identity or a group identity as an input and a ciphering key as another input or means for obtaining the encrypted identity as an output of a further algorithm using a subscriber identity or a group identity as an input and a ciphering key as another input, means for repeating the further algorithm two or more times, each repetition using a previous output of the further algorithm instead of the subscriber identity or the group identity as the input and the ciphering key as the other input, and means for receiving the encrypted identity to be modified as an output after the repetitions.

16. A system (100) as claimed in claim 14 or 15, wherein the TETRA user apparatus (130) further comprises means for updating the modified encrypted identity in response to detecting a change in the one or more parameter values.

## Patentansprüche

1. Verfahren, das **dadurch gekennzeichnet ist, dass** es umfasst:
Modifizieren (402) einer verschlüsselten Kurzkennung (encrypted short identity) in TETRA, die als ein Ausgang von einem Algorithmus TA61 oder einem Algorithmus TA6x unter Verwendung einer Teilnehmer-Kurzkennung oder einer Gruppen-Kurzkennung oder eines gemeinsamen Chiffrierschlüssels oder eines gemeinsam genutzten Chiffreschlüssels als Eingänge erzeugt wird, mittels eines Algorithmus unter Verwendung der verschlüsselten Kennung (414) und eines oder mehrerer Parameter-Wertes/Werte (413) als Eingänge des Algorithmus, wobei der Algorithmus eine modifizierte verschlüsselte Kennung (422) ausgibt; und
Verwenden (512, 517, 807, 912, 1005) der modifizierten verschlüsselten Kennung als Kennungs-Information in über eine Funkschnittstelle gesendeten Informationen.

2. Verfahren nach Anspruch 1, das des Weiteren umfasst:
Prüfen (504, 514, 804, 904), ob ein Teilnehmergerät oder eine Gruppe, dessen/deren Kennung verschlüsselt wird, die modifizierte verschlüsselte Kennung unterstützt; und
Durchführen des Modifizierens nur in Reaktion darauf, dass das Teilnehmergerät oder die Gruppe die modifizierte verschlüsselte Kennung unterstützt.

3. Verfahren nach Anspruch 1 oder 2, das des Weiteren umfasst:
Erzeugen der verschlüsselten Kennung als einen Ausgang eines weiteren Algorithmus (401') unter Verwendung einer Teilnehmer-Kennung oder einer Gruppen-Kennung als einen Eingang und eines Chiffrierschlüssels als einen anderen Eingang.

4. Verfahren nach 3, das des Weiteren umfasst:
zweimaliges oder häufigeres Wiederholen des weiteren Algorithmus, wobei bei jeder Wiederholung anstelle der Teilnehmer-Kennung oder der Gruppen-Kennung als der Eingang und der Chiffrierschlüssel als der andere Eingang ein vorhergehender Ausgang des weiteren Algorithmus verwendet werden; sowie
Empfangen der verschlüsselten Kennung zum Modifizieren als einen Ausgang nach den Wiederholungen.

5. Verfahren nach einem der vorangehenden Ansprüche, das des Weiteren umfasst, dass die verschlüsselte Kennung mit einer entsprechenden von einer Teilnehmer-Kennung oder einer Gruppen-Kennung verknüpft wird (511) und die Verknüpfung gespeichert wird.

6. Verfahren nach Anspruch 5, das des Weiteren umfasst, dass die verschlüsselte Kennung und die Teilnehmer-Kennung oder die Gruppen-Kennung mit Informationen darüber verknüpft werden, ob die modifizierte verschlüsselte Kennung unterstützt wird oder nicht.

7. Verfahren nach einem der vorangehenden Ansprüche, das des Weiteren umfasst, dass die modifizierte verschlüsselte Kennung in Reaktion darauf aktualisiert wird (805, 1003), dass eine Änderung des einen oder der mehreren Parameter-Wertes/Werte erfasst wird (801, 1001).

8. Verfahren nach einem der vorangehenden Ansprüche, das des Weiteren umfasst:
Empfangen (601) einer Nachricht mit der modifizierten verschlüsselten Kennung an der Netzwerk-Seite; und
Auflösen der verschlüsselten Kennung durch Eingeben (606) der empfangenen modifizierten verschlüsselten Kennung als einen Eingang in einen Umkehralgorithmus, der den einen oder die mehreren Parameter-Wert/e als andere Eingänge verwendet.

9. Verfahren nach Anspruch 8, das des Weiteren umfasst, dass auf Basis von Informationen in einem Header-Teil einer Nachricht oder auf Basis an der Netzwerk-Seite geführter Informationen hergeleitet wird, ob die empfangene verschlüsselte Kennung eine temporäre Kennung ist oder nicht.

10. Verfahren nach Anspruch 9, wobei die Informationen bereitgestellt werden, indem der MAC-PDU-Adresstyp der Nachricht auf den Wert 11 gesetzt wird.

11. Verfahren nach einem der vorangehenden Ansprüche, wobei der eine oder die mehreren Parameter wenigstens einen aus der folgenden Gruppe einschließt/einschließen, die eine Hyperframe-Nummer, eine Multiframe-Nummer, eine TDMA-Frame-Nummer, eine Gebietskennung (location area identity), eine Cell-ID (cell identifier), eine Netzbetreiberkennzahl (carrier number), einen Color-Code (color code), zeitbezogene Informationen sowie eine Teilnehmerklasse umfasst.

12. Computerprogrammerzeugnis, das **dadurch gekennzeichnet ist, dass** es, wenn es auf einem Computer ausgeführt wird, Programmbefehle umfasst, die zum Durchführen jeglicher der Schritte eines Verfahrens nach einem der Ansprüche 1 bis 11 konfiguriert sind.

13. Vorrichtung (1200, 1300), **dadurch gekennzeichnet, dass** sie Einrichtungen zum Implementieren eines Verfahrens nach einem der vorangehenden Ansprüche 1 bis 11 umfasst.

14. System (100), das Funk-Kommunikation (101) zwischen einem TETRA-Netzwerk (110) und einem TETRA-Teilnehmergerät (130) ermöglicht, wobei das System eine TETRA-Basisstation (120), die so konfiguriert ist, dass sie verschlüsselte Dienste über Funk bereitstellt, und die Einrichtungen zum Implementieren eines Verfahrens nach einem der Ansprüche 1 bis 11 umfasst, sowie ein TETRA-Teilnehmergerät (130) umfasst, das so konfiguriert ist, dass es eine verschlüsselte Übertragung über Funk zu der Basisstation nutzt, wobei das TETRA-Teilnehmergerät (130) Einrichtungen zum Modifizieren einer verschlüsselten Kurzkennung in TETRA mittels eines Algorithmus unter Verwendung der verschlüsselten Kennung und eines oder mehrerer Parameter-Wertes/Werte als Eingänge des Algorithmus umfasst und der Algorithmus eine modifizierte verschlüsselte Kennung ausgibt, sowie Einrichtungen zum Verwenden der modifizierten verschlüsselten Kennung als Kennungs-Information in über eine Funkschnittstelle gesendeten Informationen umfasst.

15. System (100) nach Anspruch 14, wobei das TETRA-Teilnehmergerät (130) des Weiteren Einrichtungen, mit denen die verschlüsselte Kennung als ein Ausgang eines weiteren Algorithmus unter Verwendung einer Teilnehmer-Kennung oder einer Gruppen-Kennung als einem Eingang sowie eines Chiffrierschlüssels als einem anderen Eingang erzeugt wird, oder Einrichtungen, mit denen die verschlüsselte Kennung als ein Ausgang eines weiteren Algorithmus unter Verwendung einer Teilnehmer-Kennung oder einer Gruppen-Kennung als einem Eingang sowie eines Chiffrierschlüssels als einem anderen Eingang erzeugt wird, und Einrichtungen umfasst, mit denen der weitere Algorithmus zweimal oder häufiger wiederholt wird, wobei bei jeder Wiederholung anstelle der Teilnehmer-Kennung oder der Gruppen-Kennung als der Eingang und des Chiffrierschlüssels als der andere Eingang ein vorhergehender Ausgang des weiteren Algorithmus verwendet wird, sowie Einrichtungen umfasst, mit denen die zu modifizierende verschlüsselte Kennung als ein Ausgang nach den Wiederholungen empfangen wird.

16. System (100) nach Anspruch 14 oder 15, wobei das TETRA-Teilnehmergerät (130) des Weiteren Einrichtungen zum Aktualisieren der modifizierten verschlüsselten Kennung in Reaktion auf Erfassen einer Änderung des einen oder der mehreren Parameter-Wertes/Werte umfasst.

## Revendications

1. Procédé **caractérisé en ce qu'**il comprend :
la modification (402) d'une courte identité chiffrée de TETRA, obtenue en tant que sortie d'un algorithme TA61 ou d'un algorithme TA6x en utilisant une courte identité d'abonné ou une courte identité de groupe et une clé de chiffrement commune ou une clé de chiffrement partagée en tant qu'entrées, par un algorithme utilisant l'identité chiffrée (414) et une ou plusieurs valeurs de paramètres (413) en tant qu'entrées de l'algorithme, l'algorithme délivrant en sortie une identité chiffrée modifiée (422) ; et
l'utilisation (512, 517, 807, 912, 1005) de l'identité chiffrée modifiée en tant qu'information d'identité dans les informations transmises par une interface air.

2. Procédé selon la revendication 1, comprenant en outre :
Le fait de vérifier (504, 514, 804, 904) si un appareil utilisateur ou un groupe dont l'identité est chiffrée prend en charge ou non l'identité chiffrée modifiée ; et
l'exécution de la modification uniquement si l'appareil utilisateur ou le groupe prend en charge l'identité chiffrée modifiée.

3. Procédé selon la revendication 1 ou 2, comprenant en outre :
l'obtention de l'identité chiffrée en tant que sortie d'un algorithme supplémentaire (401') utilisant une identité d'abonné ou une identité de groupe en tant qu'entrée et une clé de chiffrement en tant qu'autre entrée.

4. Procédé selon la revendication 3, comprenant en outre :
la répétition de l'algorithme supplémentaire deux fois ou plus, chaque répétition utilisant une sortie précédente de l'algorithme supplémentaire au lieu de l'identité d'abonné ou de l'identité de groupe en tant qu'entrée et de la clé de chiffrement en tant qu'autre entrée ; et
la réception de l'identité chiffrée à modifier en tant que sortie après les répétitions.

5. Procédé selon l'une quelconque des revendications précédentes, comprenant en outre l'association (511) de l'identité chiffrée avec une identité d'abonné ou une identité de groupe correspondante et la mémorisation de l'association.

6. Procédé selon la revendication 5, comprenant en outre l'association de l'identité chiffrée et de l'identité d'abonné ou de l'identité de groupe à des informations indiquant si, oui ou non, l'identité chiffrée modifiée est prise en charge.

7. Procédé selon l'une quelconque des revendications précédentes, comprenant en outre la mise à jour (805, 1003) de l'identité chiffrée modifiée en réponse à la détection (801, 1001) d'un changement desdites une ou plusieurs valeurs de paramètres.

8. Procédé selon l'une quelconque des revendications précédentes, comprenant en outre
la réception (601) par le côté de réseau d'un message avec l'identité chiffrée modifiée ; et
la résolution de l'identité chiffrée en entrant (606) l'identité chiffrée modifiée reçue en tant qu'entrée dans un algorithme inverse qui utilise lesdites une ou plusieurs valeurs de paramètres en tant qu'autres entrées.

9. Procédé selon la revendication 8, comprenant en outre le fait de déduire si, oui ou non, l'identité chiffrée reçue est une identité temporaire sur la base d'informations dans une partie d'en-tête d'un message ou sur la base d'informations maintenues par le côté de réseau.

10. Procédé selon la revendication 9, dans lequel les informations sont fournies en fixant le type d'adresse MAC de PDU du message à la valeur 11.

11. Procédé selon l'une quelconque des revendications précédentes, dans lequel lesdits un ou plusieurs paramètres comprennent au moins l'un du groupe suivant comprenant : un numéro d'hypertrame, un numéro de multi-trame, un numéro de trame de TDMA, une identité de zone d'emplacement, un identifiant de cellule, un numéro de porteur, un code couleur, des informations associées au temps, et une catégorie d'abonnés.

12. Produit-programme d'ordinateur, lorsqu'il est exécuté sur un ordinateur, **caractérisé en ce qu'**il comprend des instructions de programme configurées pour effectuer l'une quelconque des étapes d'un procédé selon l'une quelconque des revendications 1 à 11.

13. Appareil (1200, 1300) **caractérisé en ce qu'**il comprend des moyens pour mettre en oeuvre un procédé selon l'une quelconque des revendications 1 à 11 précédentes.

14. Système (100) effectuant des communications hertziennes (101) entre un réseau TETRA (110) et un appareil d'utilisateur TETRA (130), le système comprenant une station de base TETRA (120) configurée pour fournir des services chiffrés de manière hertzienne et comprenant des moyens pour mettre en oeuvre un procédé selon l'une quelconque des revendications 1 à 11 ; et un appareil d'utilisateur TETRA (130) configuré pour utiliser une communication chiffrée de manière hertzienne vers la station de base, l'appareil d'utilisateur TETRA (130) comprenant des moyens pour modifier une courte identité chiffrée de TETRA par un algorithme utilisant l'identité chiffrée et une ou plusieurs valeurs de paramètres en tant qu'entrées de l'algorithme, l'algorithme délivrant en sortie une identité chiffrée modifiée, et des moyens pour utiliser l'identité chiffrée modifiée en tant qu'informations d'identité dans les informations transmises par une interface air.

15. Système (100) selon la revendication 14, dans lequel l'appareil d'utilisateur TETRA (130) comprend en outre des moyens pour obtenir l'identité chiffrée en tant que sortie d'un algorithme supplémentaire utilisant une identité d'abonné ou une identité de groupe en tant qu'entrée et une clé de chiffrement en tant qu'autre entrée ou des moyens pour obtenir l'identité chiffrée en tant que sortie d'un algorithme supplémentaire utilisant une identité d'abonné ou une identité de groupe en tant qu'entrée et une clé de chiffrement en tant qu'autre entrée, des moyens pour répéter l'algorithme supplémentaire deux fois ou plus, chaque répétition utilisant une sortie précédente de l'algorithme supplémentaire au lieu de l'identité d'abonné ou de l'identité de groupe en tant qu'entrée et de la clé de chiffrement en tant qu'autre entrée, et des moyens pour recevoir l'identité chiffrée à modifier en tant que sortie après les répétitions.

16. Système (100) selon la revendication 14 ou 15, dans lequel l'appareil d'utilisateur TETRA (130) comprend en outre des moyens pour mettre à jour l'identité chiffrée modifiée en réponse à la détection d'un changement desdites une ou plusieurs valeurs de paramètres.
